(19) Europäisches Patentamt

European Patent Office

Office européen des brevets

(11) Veröffentlichungsnummer: **0 060 935**
**B1**

(12) # EUROPÄISCHE PATENTSCHRIFT

(45) Veröffentlichungstag der Patentschrift:
**19.02.86**

(21) Anmeldenummer: **81110021.3**

(22) Anmeldetag: **01.12.81**

(51) Int. Cl.⁴: **C 08 F 2/44**, C 08 J 3/20,
C 08 F 265/06

(54) **Verfahren zur Herstellung von Acrylatkunststoffen mit einer farblich differenzierten Oberfläche.**

(30) Priorität: **16.03.81 DE 3110093**

(43) Veröffentlichungstag der Anmeldung:
**29.09.82 Patentblatt 82/39**

(45) Bekanntmachung des Hinweises auf die Patenterteilung:
**19.02.86 Patentblatt 86/8**

(84) Benannte Vertragsstaaten:
**DE FR GB IT NL**

(56) Entgegenhaltungen:
**EP - A - 0 002 108**
**FR - A - 2 389 645**
**US - A - 3 884 871**

(73) Patentinhaber: **Röhm GmbH, Kirschenallee**
**Postfach 4242, D-6100 Darmstadt 1 (DE)**

(72) Erfinder: **Krieg, Manfred, Dr., Kesselhutweg 19,**
**D-6100 Darmstadt-Neu-Kranichstein (DE)**
Erfinder: **Lichtenstein, Hans, Ing. grad,**
**Raiffeisenstrasse 1, D-6104 Seeheim-Jugenheim 1 (DE)**

## Beschreibung

Die Aufgabe, Kunststoffe einzufärben, ist von der Technik weitgehend in befriedigender Weise gelöst worden. Auf dem Acrylglas-Sektor beispielsweise steht ein Sortiment von Farbmitteln zur Verfügung, das erlaubt, Acrylglas in nahezu beliebigen Nuancen homogen einzufärben.

In bestimmten Anwendungsgebieten, z.B. im Bausektor, speziell bei Fliessen und Sanitärobjekten, ist seit einiger Zeit eine Tendenz festzustellen, Elemente zu verwenden, deren Oberfläche sich farblich differenziert darstellt in der Weise, dass farbmittelhaltige Zonen – etwa in statistischer Verteilung – vorhanden sind, die sich optisch von der Grundeinfärbung unterscheiden lassen.

Bei den von der Technik bisher zur Verfügung gestellten Materialen mit derartiger farblicher Differenzierung, handelt es sich im allgemeinen um solche auf Keramikbasis. In Verkehrskreisen werden derartige Effekte häufig mit dem Stichwort «Rustikal-Dekor» bezeichnet.

In der DE-A 3 023 964 wurde bereits ein Verfahren vorgeschlagen zur Erzeugung farbmittelhaltiger Zonen in Acryl- und Methacrylharzen in Oberflächennähe im Zuge der Polymerisation der die Harze bildenden Monomeren und Prepolymeren in formgebenden Polymerisationskammern, bei dem zunächst ein in einem Bindemittel homogen verteiltes Farbmittel auf die Wandung der formgebenden Polymerisationskammer als Schicht aufgebracht wird, wobei das Bindemittel im flüssigen Harz bzw. seinen Vorstufen löslich oder zumindest anquellbar ist und nach dem Einfüllen der zu polymerisierenden Monomeren und/oder Prepolymeren in an sich bekannter Weise polymerisiert wird.

Das Verfahren gemäss der genannten Patentanmeldung enthält gewisse Limitierungen, die im Interesse einer allgemeineren Anwendbarkeit zu überwinden waren.

Die Limitierungen liegen einerseits in dem Verfahrensablauf begründet, zum anderen waren Objekte mit farblich differenzierten Zonen erwünscht, die möglichst nicht nur oberflächlich verankert waren.

Es wurde nun gefunden, dass man Objekte aus Acryl- und Methacrylharzen erhält, die die gewünschte farbliche Differenzierung in Form von farbmittelhaltigen Zonen aufweisen und gleichzeitig die weitergehenden Forderungen der Technik erfüllen, wenn man Perlpolymerisate auf Basis von Acryl- bzw. Methacrylharzen, welche Farbmittel des gewünschten Farbtyps enthalten, herstellt, und die so hergestellten farbmittelhaltigen Perlen oder ggf. Mischungen verschiedener Typen von farbmittelhaltigen Perlen (Pigmentperlen) in die zur Polymerisation der Acryl- bzw. Methacrylharze nach dem Stand der Technik verwendeten Vorstufen, z.B. in die üblicherweise verwendeten Sirupe, Prepolymerisate und/oder Monomeren einbringt.

Das Einbringen geschieht zweckmässigerweise so, dass die zur Erreichung der farblichen Differenzierung notwendige Verteilung der Pigmentperlen innerhalb des Polymerisationsansatzes gewährleistet ist, beispielsweise durch Einrühren. Die anschliessenden Schritte, beispielsweise das Verfüllen des Sirups in formgebende Polymerisationskammern und der nachfolgende Polymerisationsschritt können dann analog den Verfahren des Standes der Technik vorgenommen werden, ebenfalls die Entformung usw.

Während des Polymerisationsvorgangs spielt sich ein für den Erfolg des erfindungsgemässen Verfahrens in der Regel erheblicher Vorgang ab, nämlich die Sedimentation mindestens eines Teiles der farbmittelhaltigen Perlen. Die in dieser Weise zur unteren Begrenzung der formgebenden Polymerisationskammer gelangenden farbmittelhaltigen Perlen sind die Träger der farblichen Differenzierung nach Abschluss der Polymerisation; sie bilden zusammen mit der Polymermatrix die Dekorschicht.

Das erfindungsgemässe Verfahren enthält innerhalb gewisser Grenzen auch Möglichkeiten zur Steuerung des gewünschten Effektes. So ist der Vorgang der Ausbildung oberflächennaher, farblich differenzierter Zonen zunächst einmal in Abhängigkeit vom Typ und von der Konzentration des verwendeten Farbmittels innerhalb der Perlen, dann in Abhängigkeit von der Konzentration der eingebrachten farbmittelhaltigen Perlen zu sehen. Weiter beeinflusst die Absetzgeschwindigkeit bzw. die Absetzzeit die Konzentration der farbmittelhaltigen Perlen im Bereich der Basisfläche, die für den endgültigen farblichen Eindruck bestimmend ist.

Eine weitere Möglichkeit der Steuerung besteht in der Auswahl der Perlen. Perlpolymerisate, die im Sinne der vorliegenden Erfindung brauchbar sind, sind ihrer Polymerisatzusammensetzung nach bereits bekannt. Die Bandbreite der an sich geeigneten Perlen reicht von solchen auf der Basis von niedermolekularen bis zu hochmolekularen und gegebenenfalls schwach vernetzten Polymerisaten.

Generell lässt sich sagen, dass die mit dem Auge wahrnehmbaren Übergängen zwischen der Polymermatrix und den farblich differenzierten Polymerisatperlen in der Regel um so «weicher» ausfallen, je niedermolekularer das Polymerisat der Perlen ist; umgekehrt, je hochmolekularer das Polymerisat ist bzw. je stärker vernetzt, umso deutlicher lassen sich die Perleinheiten im auspolymerisierten Acryl- bzw. Methacrylharz als scharf umrandete Teilchen unterscheiden. Dazwischen liegen Übergangsformen. Schliesslich liegt eine gewisse Möglichkeit der Beeinflussung auch in der Auswahl der durchschnittlichen Teilchengrösse der anzuwendenden Perlpolymerisate.

Man kann auch sich überlagernde Effekte erzielen, z.B. durch Kombination von Perlen der verschiedenen Polymerisattypen, z.B. von niedermolekularen Typen mit fliessenden Übergängen zum Matrixpolymeren und von höhermolekularen Perltypen, die deutlich konturierte Farbinseln hervorrufen.

Das Verhältnis des Perlpolymerisats zum Matrixpolymerisat wird, je nach dem angestrebten Effekt, in gewissen Grenzen variieren. Im allgemeinen liegt der Anteil des Perlpolymerisats am Gesamtpolymerisat bei 0,1 bis 10 Gew.%, vorzugsweise bei 0,3 bis 3 Gew.-%.

Wie bereits ausgeführt, kann die Herstellung der Polymermatrix, in welche die farbmittelhaltigen Perlen eingebracht werden, in enger Anlehnung an den Stand der Technik erfolgen.

Als Monomere für die Durchführung des erfindungsgemässen Verfahrens eignen sich die zur Herstellung von Kunststoffharzen durch Polymerisation in Formen geeigneten Monomeren. In erster Linie ist dabei an Material für geformte Körper in den Anwendungsbereichen: Technik, Sanitärbereich und Haushalt zu denken, d.h. Kunststoffharze, die sich gegebenenfalls durch Unlöslichkeit in üblichen Lösungsmitteln sowie durch günstige mechanische Eigenschaften auszeichnen. Im Prinzip sind dem Verfahren Verbindungen mit polymerisationsfähigen Kohlenstoffdoppelbindungen zugänglich. Genannt seien beispielsweise Ester der Acryl- bzw. Methacrylsäure, insbesondere Methylmethacrylat als Monomere, sowie auch andere copolymerisierbare Monomere, wie z.B. Styrol, Vinylacetat etc.

Die Matrixpolymerisate auf der Basis von Methylmethacrylat können z.B. noch Anteile von 0 bis etwa 45 Gew.% an weiteren Comonomeren enthalten.

Genannt seien andere Ester der Methacrylsäure bzw. Acrylsäure, wie z.B. der Acrylsäuremethylester, Acrylsäurebutylester, α-Chloracrylsäuremethylester, Methacrylsäureäthylester; weiter (gegebenenfalls substituierte) Amide der Acrylbzw. Methacrylsäure, wie Acrylamid und Methacrylamid, Methylolmethacrylamid und -acrylamid. Ferner Acrylnitril, Styrol und Derivate desselben, wie α-Methylstyrol, Vinylester von Carbonsäure, wie Vinylacetat u.ä.

Besonders erwähnt sei die Anwesenheit von vernetzenden Monomeren, wie Äthylenglykoldimethacrylat, 1,4-Butandioldimethacrylat, Triglykoldimethacrylat, Trimethylolpropantrimethacrylat oder Allylverbindungen, wie z.B. Allylmethacrylat, Triallylcyanurat oder Triallylisocyanurat.

Die Durchführung der Polymerisation kann in an sich bekannter Weise unter Verwendung der Erfahrungen der Technik durchgeführt werden (vgl. H. Rauch-Puntigam und Th. Völker in «Acryl- und Methacrylverbindungen», Springer-Verlag 1967 und J. Brandrup – E.H. Immergut, Polymer-Handbook, 2nd Edition, Wiley-Interscience (1975). Entsprechende Techniken sind bereits in der DE-PS 639 095 in den Grundzügen beschrieben worden.

Als Initiatoren für die Polymerisation von polymerisationsfähigen Doppelbindungen, wie z.B. Acrylmonomeren, Styrol und Derivate, Ester von Vinylverbindungen, können beispielsweise Peroxyd- oder Azoverbindungen in den üblichen Mengen verwendet werden. Zur Steuerung des Molgewichts eignen sich die bekannten Regler in den an sich bekannten Konzentrationen. Genannt seien z.B. organische Schwefelverbindungen. Polymerisationsgrad und damit das Molekulargewicht der entstehenden Harzmoleküle lässt sich bekanntlich durch die Initiatorkonzentration oder/und Reglerkonzentration einstellen. So wird man bei der Polymerisation von Acrylharzen in der Regel 0,01 bis 1,0 Gew.% an Initiator verwenden. Der Zusatz an Regler liegt im allgemeinen zwischen 0,01 und 0,5 Gew.%, vorzugsweise zwischen 0,05 und 0,2 Gew.%. Im allgemeinen liegen die Molgewichte (Mw) der Matrixpolymerisate im Bereich $2\cdot10^5$ bis $5\cdot10^6$. In der Mehrzahl der Fälle ist das Matrixpolymerisat schwach vernetzt. die Vicat-Erweichungstemperatur (nach DIN 53 460, Verfahren B) liegt in der Regel bei >100°C. Weiter können die Polymerisationsansätze noch die an sich bekannten Hilfsstoffe, wie UV-Absorber, Weichmacher, Thermostabilisatoren, Antioxidantien, Flammschutzmittel etc., enthalten.

Die erfindungsgemäss zu verwendenden Polymerisatperlen können im Prinzip aus Monomeren des gleichen Typs aufgebaut sein wie das Matrixpolymerisat. (Vgl. H. Rauch-Puntigam u. Th. Völker in «Acryl- und Methacrylverbindungen», Springer-Verlag, Heidelberg, 1967, S. 208-214ff).

Die Perlpolymerisation beruht auf der Umsetzung wasserunlöslicher (oder aussalzbarer) Monomerer in Wasser bzw. wässrigen Salzlösungen, wobei sich der Polymerisationsvorgang in der Monomerenphase abspielt. Vielfach wird die Perlpolymerisation auch als «Suspensionspolymerisation» bezeichnet.

Ausser Beschleunigern und entsprechenden Polymerisationshilfsmitteln werden in weitem Umfang als weitere Zusätze sogenannte Suspensionsstabilisatoren eingesetzt, die ein Zusammenfliessen der Monomerentröpfchen verhindern sollen. Zum Beispiel können wasserlösliche Schutzkolloide als Suspensionsstabilisatoren verwendet werden.

Die Grösse der Perlen wird – wie bekannt – im wesentlichen von den technischen Verfahrensbedingungen kontrolliert, z.B. von der Rührgeschwindigkeit, Art und Menge der Suspensionsstabilisatoren. Im allgemeinen besitzen die erfindungsgemäss zur Anwendung kommenden Perlen mittlere Teilchengrössen zwischen 0,05 und 1,5 mm, speziell zwischen 0,1 und 0,3 mm.

Als Monomere stehen, wie auch bei dem Matrixpolymerisat, die Ester der Acryl- und der Methacrylsäure im Vordergrund, insbesondere das Methylmethacrylat. Weitere Monomere, wie z.B. die Ester von $C_1$–$C_{18}$-Alkoholen, wie etwa das Ethylacrylat, Butylacrylat, Butylmethacrylat, Octylmethacrylat, Benzylmethacrylat, können ebenfalls als Monomere und insbesondere als Comonomere eingesetzt werden, daneben polymerisationsfähige Amide, wie Acrylamid, Methacrylamid, Nitrile, wie Acrylnitril, Methacrylnitril oder bivalente Monomere, wie Säureanhydride (vgl. UP-PS 2 171 765, 2 440 808.) Die Konsistenz des Polymerisats wird in prinzipiell bekannter Weise von der Zusammensetzung beeinflusst. So liefern Acrylsäureester je nach Erweichungspunkt weiche bis klebrige Perlen. Bevorzugt sind Perlen auf Basis von Methylmethacrylat.

Die Auswahl der Polymerisationshilfsmittel bei der Perlpolymerisation kann in Anlehnung an die bekannten Verfahren der Technik erfolgen (vgl. Rauch-Puntigam, loc.cit.; DE-OS 2 135 828, DE-OS 2 815 506).

Im allgemeinen kommen monomerenlösliche und wasserunlösliche Initiatoren zur Anwendung, beispielsweise Dibenzoylperoxid und Lauroylperoxid neben Azokatalysatoren. (Gegen Ende des Polymerisationsvorgangs können gegebenenfalls Hochzerfaller zugegeben werden). In der Regel beträgt der Anteil an Initiator 0,1 bis 1 Gew.%, vorzugsweise um 0,5 Gew.%, bezogen auf die Monomeren.

Als Regler finden auch hier Schwefelregler Anwendung, insbesondere haben sich aliphatische Mercaptane und/oder Schwefeläther bewährt.

Genannt seien z.B. Laurylmercaptan, Bis-(-2-ethylhexyl)-sulfid, Bis-(2-mercaptoethyl)sulfid u.ä.

Der Anteil an Reglern beträgt im allgemeinen 0,01 bis 1,0 Gew.%, vorzugsweise 0,05 bis 0,4 Gew.%, bezogen auf die Monomeren. Das Molgewicht (Mw) liegt bei den erfindungsgemäss zu verwendenden Perlen im allgemeinen zwischen $5 \cdot 10^4$ und $5 \cdot 10^6$, vorzugsweise zwischen $10^5$ und $10^6$. Auch ungeregelte oder schwach vernetzte Perlen können mit Vorteil zur Anwendung kommen.

Als Suspensionsstabilisatoren können makromolekulare, wasserlösliche Verbindungen, wie z.B. Polyvinylalkohol oder Polyacrylsäure in einer Menge von 0,01 bis 1 Gew.%, bezogen auf die Monomeren oder anorganische, pulverförmige Zusätze verwendet werden, die als solche zugesetzt oder durch Fällung im Medium erzeugt werden können. Genannt seien z.B. Erdalkalisalze, wie Carbonate,-sulfate, -silikate usw. (Vgl. C.E. Schildknecht Polymerization Processes, J. Wiley u. Sons 1977, S. 119ff).

Die Perlpolymerisation kann bei erhöhter Temperatur durchgeführt werden, beispielsweise zwischen 50 und 100°C, wobei als Ausgangswert etwa 75°C gelten kann. Die Temperaturführung hat auch hier der entstehenden Polymerisationswärme Rechnung zu tragen. Für den Abschluss des Polymerisationsvorgangs ist das Abklingen der exothermen Reaktion, d.h. das Fallen der Temperatur nach Erreichen eines Temperaturmaximums ein Indikator. Zweckmässigerweise wird noch über einen gewissen Zeitraum, etwa im Bereich des erreichten Temperaturmaximums nacherhitzt.

Die Herstellung der farbmittelhaltigen Polymerisatperlen kann in unmittelbarer Anlehnung an die bekannten und bewährten Verfahren zur Perlpolymerisation vorgenommen werden. Das technische Handeln sei am Beispiel eines (Meth)-acrylat-Perlpolymerisats näher erläutert. Im einzelnen wird dabei zum Beispiel von zwei Phasen, der Wasserphase a) und der Monomerphase b) Gebrauch gemacht.

Bei der Bereitstellung der Wasserphase a) kann vorzugsweise von vollentsalztem Wasser ausgegangen werden, das erhitzt wird und dem man die übrigen Bestandteile bzw. Zusätze zur Wasserphase zufügt. So kann man die Wasserphase durch Zugabe von Alkalien, wie z.B. Soda, zunächst alkalisch stellen.

Anschliessend können z.B. die Dispergierhilfsmittel zugegeben werden, zweckmässig in etwas Wasser gelöst.

Zur Bereitstellung der Monomerphase b) wird das Farbmittel mit einem gewissen Anteil des Monomeren versetzt, etwa im Verhältnis 1:5 bis 1:100, überwiegend 1:10 bis 1:100, im Durchschnitt etwa 1:20 bis 1:50 und zweckmässigerweise unter Zusatz eines vorpolymerisierten Anteils des infrage stehenden Polymerisats in geeigneter Weise dispergiert. Man bedient sich z.B. vorteilhaft eines schnellaufenden Dispergators (Rotor-Sator-Prinzip). Ein alternatives Vorgehen besteht darin, dass man das Pigment im wesentlichen in einer Polymerschmelze in den dafür geeigneten Dispergieraggregaten, wie Knetern, Mischwalzen usw. dispergiert. Der Anteil an Pigment in der Präparation kann dabei ca. 10 bis ca. 70 Gew.%, vorzugsweise zwischen 30 und 60 Gew.%, betragen.

Falls das Molekulargewicht durch Reglerzusatz gesteuert werden soll, wird ebenfalls Regler zugesetzt. Zur Herstellung einer homogenen Suspension kann z.B. noch nachgerührt werden (Flügelrührer). Von der entstehenden Suspension wird der zur Herstellung des Farbeffekts erforderliche Anteil entnommen und mit Monomeren verdünnt. Als Richtwert kann ein Verhältnis 1:10 bis 1:20 gelten.

Die eigentlichen Perlpolymerisation kann anschliessend so vorgenommen werden, dass man die Monomerphase mit dem Initiator versetzt und zu der aufgeheizten Wasserphase zugibt. Das Ende des Polymerisationsvorgangs kann durch das Abklingen des auftretenden Temperaturmaximums erkannt werden. Im allgemeinen wird der Polymerisationsvorgang <2 Stunden in Anspruch nehmen. Als Richtwert können etwa 80 Minuten gelten.

Anschliessend erhitzt man zweckmässig noch über einen gewissen Zeitraum, etwa im Bereich des erreichten Temperaturmaximums nach. Als Richtwert kann ca. 1 Stunde angenommen werden.

Die erhaltene Perlsuspension wird im weiteren vom Suspensionsstabilisator befreit, abfiltriert, mit (vollentsalztem) Wasser gewaschen und zweckmässigerweise unter Erhitzen unterhalb des Erweichungspunktes, etwa bei 50°C getrocknet, vorzugsweise im Umluftschrank.

Die Herstellung von farbmittelhaltige Zonen enthaltenden Acrylharzen kann technisch, beispielsweise wie folgt, durchgeführt werden:

Man gibt ein sirupöses Präpolymerisat vor (als Richtwert sei ein 20%iger Umsatz genannt) dem ein geeigneter Initiator, beispielsweise ein Azoinitiator und gegebenenfalls vernetzende Agentien gleichmässig verteilt, vorzugsweise eingerührt werden. Falls das Matrixpolymerisat selbst eingefärbt sein soll, wird das bzw. die Farbmittel in geeigneter Form, z.B. in Form einer Farbpaste, die mit einem (löslichen) Polymeren zubereitet worden ist, zugesetzt und homogen verteilt. Das so entstandene Gemisch stellt den Grundansatz dar. Zu dem Grundansatz gibt man die farbmittelhaltigen Polymerisatperlen so hinzu, dass sie im Ansatz verteilt werden, vorzugsweise unter Rühren, rührt zweckmässigerweise noch über einen kürzeren Zeitraum nach und füllt in die formgebende Polymerisationskammer ab.

Die Schichtdicke hängt dabei von der Zweckbestimmung des geformten Körpers ab. Für Objekte, die im Bau - insbesondere im Sanitärbereich zur Anwendung kommen – wird die Schichtdicke im allgemeinen 10 mm nicht überschreiten; als Richtwert können 5 mm angenommen werden.

Die Polymerisation wird in der Regel bei erhöhter Temperatur, etwa im Bereich von 40–60°C, vorgenommen. Als Richtwert seien ca. 45°C genannt. Die Polymerisationsdauer liegt in der Regel zwischen 10 und 20 Stunden, vorzugsweise zwischen 12 und 18 Stunden. Als Richtwert können 15 Stunden angesehen werden.

Anschliessend wird zweckmässig noch eine Temperung durchgeführt, etwa bei 100–120°C während eines Zeitraumes von 3–8 Stunden, im Durchschnitt etwa 5 Stunden. In der Mehrheit der Fälle wird auch das Matrixpolymerisat in passender Weise eingefärbt sein.

Die zur Einfärbung der Polymerisate geeigneten Farbmittel, d.h. Farbstoffe und Pigmente, sowohl anorganische als organische, können – im Zuschnitt auf die spezifischen einzufärbenden Polymerisate – dem Stand der Technik entnommen werden (vgl. Vieweg-Esser, Kunststoff-Handbuch, Band IX, 'Polymethacrylate', C. Hansen Verlag 1975).

In der Regel wird der Farbmittelgehalt der Basispolymerisate 1,0 Gew.% nicht überschreiten. Im allgemeinen dürfte er bei 0,3 bis 0,8 Gew.%, bezogen auf das Polymerisat liegen. Im allgemeinen liegt der Farbmittelgehalt in den Perlen höher oder es wird ein anderes Farbmittel verwendet als beim Matrixpolymerisat. Der Gehalt der Perlen an Farbmitteln liegt in der Regel im Bereich von 0,05 bis 20 Gew.% (bezogen auf die Perlen). Bei einer ebenfalls vom nachgesuchten Schutz umfassten Ausführungsform können aber auch heller bis nicht eingefärbte Perlen mit einem kontrastierend dunkler eingefärbtem Perlen Matrixpolymerisat zusammen verwendet werden.

Zu den mit besonderem Effekt zu verwendenden Farbmitteln gehören sowohl anorganische als organische Pigmente, z.B. Pigmentruss, Gelb- und Rotpigmente auf Cadminumsulfidbasis, Phthalocyaninblau u.a. Durch thermisches Umformen der nach dem erfindungsgemässen Verfahren erhältlich Objekte nach konventionellen Verfahren kann man in erwünschter Weise Objekte mit strukturierter Oberfläche erzeugen.

Die folgenden Beispiele dienen zur Erläuterung der Erfindung.

A) Herstellung von PMMA-Perlpolymerisaten mit Pigmenten für Plexiglaseinfärbungen mit rustikalem Dekor

Beispiel 1
Wasserphase
In einer geschlossenen, heizbaren Rührapparatur, bestehend aus Rundkolben, Rührer und Thermometer, werden 960 Teile vollentsalztes Wasser mit 10 Teilen Aluminiumsulfat vorgelegt und auf 75°C erhitzt. Anschliessend werden 40 Teile 10%iger Sodalösung zugegeben sowie 0,1 Teile Na-Laurylsulfonat in etwas Wasser gelöst.

Monomerphase
1 Teil eines feinteiligen Pigmentrusses wird mit 40 Teilen Methylmethacrylat versetzt und mit einem schnellaufenden Dispergator, nach dem Rotor-Stator-Prinzip arbeitend, unter Zugabe von 1 Teil eines löslichen Polymethylmethacrylat-Harzes dispergiert. Von dieser Suspension werden 35 Teile entnommen und mit Methylmethacrylat auf 500 Teile verdünnt.

Polymerisation
Die Monomerphase wird mit 1,5 Teilen Initiator Dilauroylperoxyd versetzt, der 75°C heissen Wasserphase unter Rühren zugegeben und etwa 80 Minuten polymerisiert. (Ende der Polymerisation wird durch Abklingen des auftretenden Temperaturmaximums von 80 bis 85°C angezeigt). Anschliessend wird noch eine Stunde bei 85°C nacherhitzt.

Die erhaltene Perlsuspension wird nach dem Abkühlen mit Schwefelsäure bis pH 2 angesäuert, abfiltriert, mit vollentsalztem Wasser ausgewaschen und 20 h bei 50°C im Umluftschrank getrocknet.

Man erhält ein schwarzes Perlpolymerisat mit einer zentralen Perlgrösse von 0,21 mm und einem mittleren Molekulargewicht $M_w$ von $\sim 1,2 \cdot 10^6$ g/Mol.

Beispiel 2
Wasserphase
Analog Beispiel 1.

Monomerphase
Analog Beispiel 1.

Polymerisation
Analog Beispiel 1 (mit verringerter Rührgeschwindigkeit) jedoch werden der Monomerphase zusätzlich 0,5 Teile 2-Etylhexylthioglycolat als Regler zugegeben und anschliessend in der 75°C heissen Wasserphase polymerisiert.

Man erhält ein schwarzes Perlpolymerisat mit einer zentralen Perlgrösse von 0,95 mm und einem mittleren Molekulargewicht $M_w$ von $\sim 2,6 \cdot 10^5$ g/Mol.

Beispiel 3
Wasserphase
Analog Beispiel 1.

Monomerphase

197 Teile eines Gelbpigments, z.B. CdS, werden mit 3 Teilen eines feinen Pigmentrusses in Gegenwart von 200 Teilen eines löslichen Polymethylmethacrylat-Harzes auf eine Mischwalze nach bekannten Verfahren dispergiert. 100 Teile dieser Pigmentpräparation werden mit 400 Teilen Methylmethacrylat versetzt und 2 Stunden am Flügelrührer gerührt, bis eine homogene Suspension entsteht.

Polymerisation

Analog Beispiel 1, jedoch werden der Monomerenphase 2,5 Teile Dilauroylperoxid und 2,0 Teile Ethylhexylthioglycolat zugegeben und anschliessen in den 75°C heissen Wasserphase polymerisiert.

Man erhält ein grünes Perlpolymerisat mit einer zentralen Perlgrösse von 0,15 mm und einem mittleren Molekulargewicht Mw von $\sim 1 \cdot 10^5$ g/Mol.

Beispiel 4
Wasserphase

Analog Beispiel 1.

Monomerphase

50 Teile eines Gelbpigmentes werden mit 150 Teilen Methylmethacrylat versetzt und mit einem schnelllaufenden Dispergator, nach dem Rotor-Stator-Prinzip arbeitend, unter Zugabe von 25 Teilen eines löslichen Polymethylmethacrylat-Harzes dispergiert. Die erhaltene Pigmentpaste wird mit Methylmethacrylat auf 500 Teile verdünnt.

Polymerisation

Analog Beispiel 3.

Man erhält ein gelbes Perlpolymerisat mit einer zentralen Perlgrösse von 0,23 mm und einem mittleren Molekulargewicht Mw von $\sim 1 \cdot 10^5$ g/Mol.

B) Verfahren zur Herstellung von farbig gemustertem Plexiglas für den Sanitär-Bereich

Beispiel 5

In 4000 Teilen einer sirupösen PMMA-Präpolymerisates mit $\sim 20\%$ Umsatz und einem mittleren Molekulargewicht Mw von 250.000 g/Mol werden 3,2 Teile 2,2'-Azobis-(isobutyronitril) und 20 Teile Triallylcyanurat eingerührt. Aus einer Mischung von 10,4 Teilen eines Weisspigmentes, 6,0 Teilen eines Gelbpigmentes, 2,8 Teilen eines Rotpigmentes und 0,15 Teilen eines Schwarzpigmentes wird mit 12 Teilen eines löslichen PMMA-Harzes und 120 Teilen Methylmethacrylat mit einem schnellaufenden Dispergator eine Pigmentpaste nach bekannten Verfahren angerieben und dem obigen Ansatz unter Rühren zugeben. Diesem Grundansatz gibt man 40 Teile eines feinteiligen, ungeregeltes, schwarz pigmentiertes Perlpolymerisats hinzu, rührt ca. 15 min. nach und verfüllt diesen Ansatz in eine Kammer von 70 × 100 cm Grösse und 5 mm Dicke. Die Polymerisation erfolgt bei 24°C 15 h und anschliessend wird die Kammer 5 h im Umluftschrank bei 115°C getempert.

Man erhält eine PMMA-Platte, die auf der Unterseite eine gleichmässige Verteilung kleiner schwarzer Punkte auf brauner Grundfarbe abzeichnet. Nach Temperung und Umformung zu einem Sanitärartikel zeichnet sich die Oberfläche durch eine leicht matte Email-Struktur aus.

Beispiel 6

Wie Beispiel 5, jedoch wird eine Mischung von 40 Teilen eines feinteiligen, ungeregelten Perlpolymerisats und 20 Teilen eines gröberen geregelten, löslich, schwarz eingefärbten Perlpolymerisats zugegeben.

Man erhält eine PMMA-Platte, die auf der Unterseite eine gleichmässige Verteilung kleiner schwarzer Punkte auf brauner, etwas schattiert wirkender Grundfarbe abzeichnet. Nach dem Umformen zeichnet sich die Oberfläche durch eine leicht matte Email-Struktur aus.

Beispiel 7

Wie Beispiel 5, jedoch wird die Pigmentpaste aus einer Mischung von 3 Teilen Weisspigment, 22,5 Teilen Gelbpigment und 2 Teilen eines Braunpigmentes abgerieben. Als Perlpolymerisat wird die Mischung analog Beispiel 6 zugegeben, jedoch zusätzlich mit 10 Teilen eines grün eingefärbten, löslichen Perlpolymerisates. Man erhält eine PMMA-Platte, die auf der Unterseite eine gleichmässige Verteilung kleiner schwarzer Punkte auf gelb-grüner, etwas schattiert wirkender Grundfarbe abzeichnet.

**Patentansprüche**

1. Verfahren zur Herstellung von Objekten aus Kunststoffen auf Acryl- und/oder Methacrylharzbasis, deren Oberfläche farblich differenzierte Zonen aufweist, im Zuge der an sich üblichen Polymerisation der Acryl- und/oder Methacrylharze, unter Verwendung formgebender Polymerisationskammern, dadurch gekennzeichnet, dass man Perlpolymerisate auf Basis von Acryl- und/oder Methacrylharzen herstellt, welche zur farblichen Differenzierung geeignete Farbmittel enthalten, die farbmittelhaltigen Perlpolymerisate in die an sich üblichen polymerisationsfähigen Monomeren und/oder Prepolymerisate einträgt und die Polymerisation in den formgebenden Polymerisationskammern zu Ende führt und Entformung vornimmt.

2. Verfahren gemäss Anspruch 1, dadurch gekennzeichnet, dass die Bedingungen so gewählt werden, dass das gebildete Acryl- und/oder Methacrylharz (ohne Zusatz der Perlpolymerisate) im Molekulargewichtsbereich (Mw) von $2 \cdot 10^5$ bis $5 \cdot 10^6$ liegt bzw. schwach vernetzt ist und eine Vicat-Erweichungstemperatur (nach DIN 53 460, Verfahren B) von $> 100°C$ besitzt.

3. Verfahren gemäss den Ansprüchen 1 und 2, dadurch gekennzeichnet, dass das Acryl- und/oder Methacrylharz selbst geeignete Farbmittel enthält.

4. Verfahren gemäss den Ansprüchen 1 bis 3, dadurch gekennzeichnet, dass der Anteil des Perlpolymerisats am Gesamtpolymerisat 0,1 bis 10 Gew.%, vorzugsweise 0,3–3 Gew.%, beträgt.

5. Verfahren gemäss den Ansprüchen 1 bis 4, dadurch gekennzeichnet, dass das Molekulargewicht (Mw) der Perlen zwischen $5 \cdot 10^4$ und $5 \cdot 10^6$ beträgt bzw. die Perlen vernetzt sind.

6. Verfahren gemäss den Ansprüchen 1 bis 5, dadurch gekennzeichnet, dass die Perlen eine mittlere Teilchengrösse zwischen 0,05 und 1,5 mm, vorzugsweise zwischen 0,1 und 0,3 mm, besitzen.

7. Verfahren gemäss den Ansprüchen 1 bis 6, dadurch gekennzeichnet, dass das Perlpolymerisat anorganische und/oder organische Pigmente in Konzentrationen von 0,05 bis 20 Gew.% enthält.

8. Verfahren zur Herstellung von Objekten aus Kunststoffen auf Acryl- und/oder Methacrylharzbasis, deren Oberfläche farblich differenzierte Zonen aufweist mit strukturierter Oberfläche, dadurch gekennzeichnet, dass man die nach dem Verfahren gemäss den Ansprüchen 1 bis 7 hergestellten Objekte thermisch umformt.

## Claims

1. Process for producing objects made of plastics based on acrylic and/or methacrylic resin, the surface of which comprises zones of different colours, in the course of the conventional polymerisation of the acrylic and/or methacrylic resins, using shaping polymerisation chambers, characterised in that bead polymers are produced on the basis of acrylic and/or methacrylic resins, containing suitable dyestuffs for colour differentiation, the bead polymers containing dyestuffs are introduced into the polymerisable monomers and/or prepolymers, which are conventional per se, and polymerisation is completed in the shaping polymerisation chambers and the products are removed from the moulds.

2. Process as claimed in claim 1, characterised in that the conditions are selected so that the acrylic and/or methacrylic resin formed (without the bead polymers added) is within a molecular weight range (Mw) of from $2.10^5$ to $5.10^6$ or is slightly cross-linked and has a Vicat softening temperature (according to DIN 53 460, Method B) of $> 100°C$.

3. Process as claimed in claims 1 and 2, characterised in that the acrylic and/or methacrylic resin itself contains suitable dyestuffs.

4. Process as claimed in claims 1 to 3, characterised in that the proportion of bead polymer in the total polymer is from 0.1 to 10% by weight, preferably from 0.3 to 3% by weight.

5. Process as claimed in claims 1 to 4, characterised in that the molecular weight (Mw) of the beads is between $5.10^4$ and $5.10^6$ or the beads are cross-linked.

6. Process as claimed in claims 1 to 5, characterised in that the beads have an average particle size of between 0.05 and 1.5 mm, preferably between 0.1 and 0.3 mm.

7. Process as claimed in claims 1 to 6, characterised in that the bead polymer contains inorganic and/or organic pigments in concentrations of from 0.05 to 20% by weight.

8. Process for preparing objects from plastics based on acrylic and/or methacrylic resin, the surface of which comprises differently coloured zones with a structured surface, characterised in that the objects produced using the process as claimed in claims 1 to 7 are thermally deformed.

## Revendications

1. Procédé pour la fabrication d'objets en matière plastique à base de résine acrylique et/ou méthacrylique, dont la surface présente des zones différenciées par la couleur, au cours de la polymérisation en soi classique de la résine acrylique et/ou méthacrylique avec utilisation de chambres de polymérisation donnant leur forme aux objets, caractérisé en ce qu'on prépare des produits de polymérisation en perles à base de résines acryliques et/ou méthacryliques contenant des colorants qui conviennent pour la différenciation par la couleur, on introduit les produits de polymérisation en perles contenant des colorants dans les monomères polymérisables et/ou prépolymères usuels, on mène à bonne fin la polymérisation dans les chambres de polymérisation donnant leur forme aux objets et on procède au démoulage.

2. Procédé selon la revendication 1, caractérisé en ce que les conditions sont choisies de telle manière que la résine acrylique et/ou méthacrylique (sans addition de produit de polymérisation en perles) se situe dans la gamme de poids moléculaire (Mw) de $2.10^5$ à $5.10^6$ ou soit faiblement réticulé et présente une température de ramollissement Vicat (d'après la DIN 53 460, procédé B) de plus de 100°C.

3. Procédé selon la revendication 1 ou 2, caractérisé en ce que la résine acrylique et/ou méthacrylique contient elle-même des colorants appropriés.

4. Procédé selon l'une quelconque des revendications 1 à 3, caractérisé en ce que la part du produit de polymérisation en perles dans le produit de polymérisation total est comprise entre 0,1 et 10% en poids, de préférence entre 0,3 et 3% en poids.

5. Procédé selon l'une quelconque des revendications 1 à 4, caractérisé en ce que le poids moléculaire (Mw) des perles se situe entre $5.10^4$ et $5.10^6$ ou les perles sont réticulées.

6. Procédé selon l'une quelconque des revendications 1 à 5, caractérisé en ce que les perles ont une grosseur de particules moyenne comprise entre 0,05 et 1,5 mm, de préférence entre 0,1 et 0,3 mm.

7. Procédé selon l'une quelconque des revendications 1 à 6, caractérisé en ce que le produit de polymérisation en perles contient des pigments minéraux et/ou organiques dans des concentrations de 0,05 à 20% en poids.

8. Procédé pour la fabrication d'objets de matière plastique à base de résine acrylique et/ou méthacrylique dont la surface présente des zones différenciées par la couleur avec une surface structurée, caractérisé par le fait qu'on façonne thermiquement les objets fabriqués par le procédé suivant les revendications 1 à 7.